Europäisches Patentamt

European Patent Office

Office européen des brevets

(11) Publication number: **0 167 094**
**A1**

(12) # EUROPEAN PATENT APPLICATION

(21) Application number: 85107872.5

(22) Date of filing: 25.06.85

(51) Int. Cl.⁴: **B 01 D 13/04**

(30) Priority: 30.06.84 JP 135696/84

(43) Date of publication of application:
08.01.86 Bulletin 86/2

(84) Designated Contracting States:
CH DE FR GB IT LI NL

(71) Applicant: Taga, Jun
1-10, Minami Ikuta 7-chome Tama-ku
Kawasaki-shi Kanagawa-ken(JP)

(72) Inventor: Taga, Jun
1-10, Minami Ikuta 7-chome Tama-ku
Kawasaki-shi Kanagawa-ken(JP)

(74) Representative: Flach, Dieter Rolf Paul,
Dipl.-Phys. et al,
Patentanwälte Andrae/Flach/Haug/Kneissl
Prinzregentenstrasse 24
D-8200 Rosenheim(DE)

(54) Porous membrane filter and its manufacturing process.

(57) A porous membrane filter and its manufacturing process comprise winding up a single multifiber (M) tightly round a bobbin (3), said multifiber having a Sea portion (1) and a large number of Islands (2); incorporating said bobbin wound up by said multifiber into cylindrical chamber (9) of a sintering furnace (8); melting the Sea portion under a high temperature and a high pressure by means of heater means and pressure means (10, 12) disposed on said sintering furnace; slicing said bobbin treated by the aforesaid step vertically relative to respective fiber axis; and dissolving said large number of Islands by means of etching and transforming them into pores, thereby producing ultramicro-pores on the surface of the membrane.

FIG.4

EP 0 167 094 A1

## POROUS MEMBRANE FILTER AND ITS MANUFACTURING PROCESS

This invention relates to a porous membrane filter and its manufacturing process.

A Patent application entitled "A porous membrane" was filed in 1983 at the Patent Office of Japan by the present inventor, and Serial No. 58-205496 was assigned to this Patent application.

According to one aspect of this application, a desired number of individual hollow fibers are integrally united and bound by a binder in parallel with respective fiber axes, thereby producing a bound multifiber material having a certain thickness. Subsequently, the bound multifiber material is sliced vertically relative to the respective fiber axes by slice means, thereby a porous membrane can be produced.

The process for manufacturing a porous membrane filter according to this invention comprises: winding up a single multifiber tightly round a bobbin, said multifiber having a Sea portion (binder) and a large number of Islands (strands); incorporating said bobbin wound up by said multifiber into a cylindrical chamber of a sintering furnace; melting the Sea portion under a high temperature and a high pressure by means of heater means and pressure means disposed on said sintering furnace; slicing said bobbin treated by the aforesaid process vertically relative to respective fiber axis; and dissolving said large number of Islands by means of etching and transforming them into pores, thereby producing ultramicro-pores on the surface of the membrane.

The porous membrane filter manufactured by the above process has a very regular pore distribution. The pore diameter is no more than 5μ.

In general, there exist three main methods for producing porous membrane filters.

One is a radiation method, by means of which a plastic membrane is perforated by radial rays and pores are formed through etching.

According to a second method, a high polymer sol is coated on a flattened plate, and a porous membrane filter is produced by vaporizing a solvent.

According to a third method, when a membrane of tetrafluroethylene is oriented biaxially, a plurality of slits occur, and pores are formed by making use of the plurality of slits.

In each of those methods the diameter of each pore is not formed uniformly. The ratio of maximum pore diameter vs. minimum pore diameter is 2.8 : 1 in the first method, 3.8 : 1 in the second method and 4.5 : 1 in the third method. In addition, the material of the porous membrane filter is limited largely. From this point of view, the present invention has been achieved.

A main object of this invention is to provide a process for producing a porous membrane filter, in which each pore diameter has superior accuracy, namely the ratio of the maximum pore diameter vs. the minimum pore diameter can be within 1.5 : 1.

Another object of this invention is to provide a porous membrane filter which can be made of any thermoplastic resin. Therefore, selection of material is enlarged.

According to the conventional method, a plurality of pores are produced by respective method such as e.g. radial rays, so that the profile and distribution of each pore are random. On the contrary, the material of the porous membrane according to this invention is a multifiber containing a large number of "Islands" (strands) having accurate sectional profile. In other words, the Islands are distributed symmetrically and uniformly and can finally be produced as pores by the process as described hereinafter.

As a result, it is possible to produce a highly accurate membrane filter which can surpass the level of the conventional one. I may say that such highly accurate membrane filter is something like a uniform structure of a large number of identical cells formed on a living organism.

In order to practice this invention, it is required to prepare a multifiber, i.e. an Islands-Sea type fiber having a large number of Islands (strands) which are finally transformed into the pores. The Islands-Sea type fiber is e.g. disclosed in the Japanese Examined Patent Publication No. 44-18369 (published in 1969). It is a multifiber made from two different kinds of fibrous high polymer and its strands are distributed symmetrically in the Sea (binding material or briefly binder).

According to this invention, such Islands-Sea type fiber is used for a material of a porous membrane filter, not for a fiber material. Accordingly, the Islands must be soluble, but the strength of the fiber is unnecessary. Further, the Islands may be made of a solid substance or a higher viscosity substance than the Sea. Any substance that has neither compatibility nor chemical activity is usable. Such substance is advantageous for the sintering process which will be described hereinafter.

Accordingly, it is required that only the sea has spinning property.

It is unnecessary to enlarge the draft ratio or carry out orientation and thermal setting. That is, because this material is not used as the fiber, it is not required to have strength in an axial direction. On the contrary, the material having such strength becomes a big obstacle for the membrane filter of this invention, because it causes cracking. It should be noted that the membrane filter of this invention is a matrix in which the strands are distributed in a thickness direction.

One way of carrying out this invention is described in detail below with reference to drawings; in which illustrate only one embodiment, in which:

Fig. 1 is a traverse section view of a multifiber which is a basic material of a membrane filter according to this invention.

Fig. 2 is a traverse section view of a bobbin round which the multifiber is wound up tightly.

Fig. 3 is a vertical section view of a sintering furnace, in which the bobbin wound by the multifiber is incorporated.

Fig. 4 is a perspective view of a membrane filter according to this invention, which is formed in a pleat-type.

A preferred example of this invention will be described with reference to the accompanying drawings.

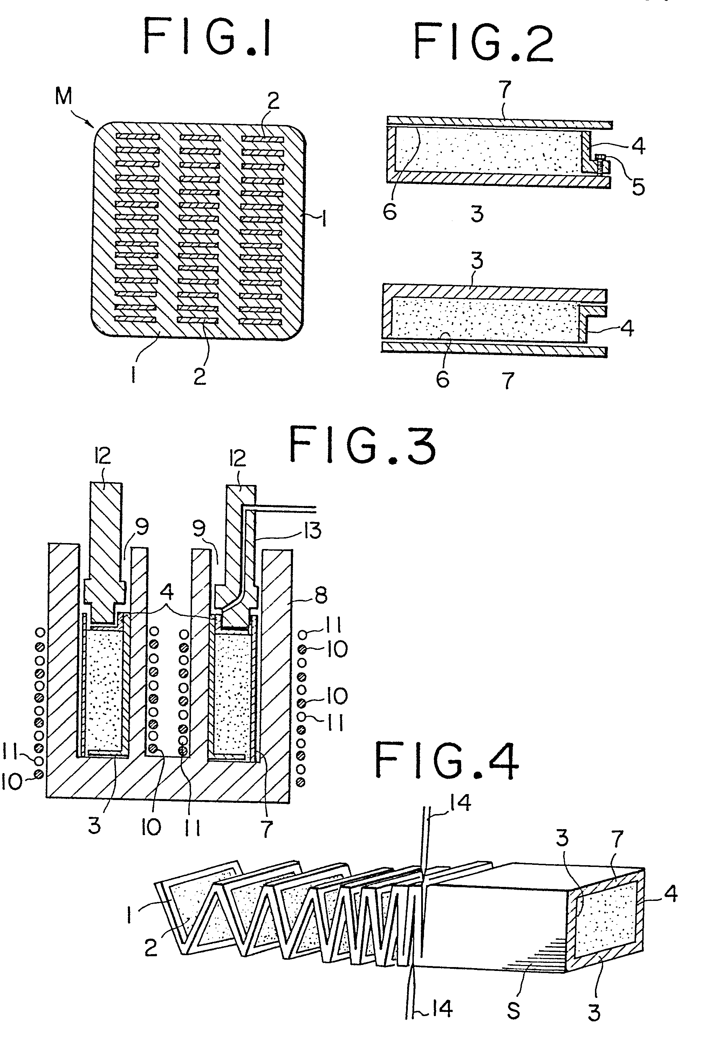

Fig. 1 shows a horizontal section view of a multifiber M as a material which is disclosed in the Japanese Examined Patent Publication No. 44-18369. Numeral 1 is a Sea portion made of polypropylene and numeral 2 is an Island portion (strand) made of polystyrene terephthalate. The multifiber M is nearly square in section, of which one side is about 200μ. It contains 100 strands each having an elliptic profile in section. Each elliptic profile has length 10μ and width 1μ. Those strands 2 are distributed symmetrically in the Sea portion 1.

The multifiber M is wound up tightly round a bobbin 3 of 100 mm in diameter without making any gap as shown in Fig. 2. A flange of the bobbin 3 is 140 mm in diameter. Accordingly, the thickness of bundle is 20 mm. Numeral 4 is a slidable flange and fixed with the bobbin 3 by a screw 5. The material of the bobbin 3 is also polypropylene just like that of the Sea portion 1 of the multifiber M.

Next to this, the bobbin 3 wound by the multifiber M is covered by a shrinkable polypropylene tube 6 of 0.03 mm in thickness. Subsequently, the bobbin 3 is covered by a polypropylene external cylinder 7. After that, a slit is given to the bundle by a knife in axial direction of the bobbin 3 so as not to injure it. The object of this slit is to discharge air from the tightly wrapped multifibers.

After that, the bobbin 3 wound up by the multifiber M is tightly incorporated in a chamber 9 of a sintering furnace 8 as shown in Fig. 3. Numeral 10 is heater means and numeral 11 is a cooling pipe for supplying water. The heater means 10 and the cooling pipe 11 are disposed one after another round the external wall of the sintering furnace 8 so as to enclose the bobbin 3. The temperature control of the heater means 10 and the cooling pipe 11 is made suitably by control means (not illustrated). Numeral 12 is a pressure cylinder which is placed on the surface of the flange 4. The pressure cylinder 12 is provided with an air discharge path 13 which is formed thereinside, and connected to an outside vacuum pump (not illustrated).

The pressure cylinder, vacuum pump, airtight packings and other additional components are conventional.

A heating and pressurizing process for melting the Sea portion 1 of the multifiber M will be described hereinafter.

First of all, by actuating the pressure cylinder 12, a pressure of 30 kg/cm$^2$ was applied to the bobbin 3 incorporated in the sintering furnace 8. The air pressure within the chamber 9 was reduced by means of the vacuum pump. Subsequently, the sintering furnace 3 was heated by the heater means 10 and the temperature of the bobbin 3 was raised to about 120°C. Then, the air remaining between adjacent multifibers was discharged from the air discharge path 13 by way of the slit. If the slit was not formed, the air remaining between adjacent multifibers might make a continuous linear form, probably several ten thousand meters in length. Therefore, the slit performs an important function in this invention.

In order to discharge the air furthermore, the lower part of the bobbin 3 was heated at a temperature of 180°C while maintaining the reduced air pressure within the chamber 9. Further, applying the pressure of 40 kg/cm$^2$ to the surface of the flange 4 by means of the pressure cylinder, the middle and upper part of the bobbin 3 was heated. Finally, the Sea portion (binder) 1 was completely melted at a temperature of 200°C and with the pressure of 75 kg/cm$^2$. After that, the temperature of the bobbin 3 was rapidly reduced to 170°C by supply water into the cooling pipe 11. While preventing occurrence of air cells due to shrinking, the bobbin 3 was gradually cooled from its lower part and the temperature of the bobbin 3 became 120°C.  Then, thus treated bobbin 3 was taken out.

The bobbin 3 was divided into four segments in an axial direction.  Each segment that was changed to a fan shape was again changed to a rectangular cubic segment S as shown in Fig. 4 by   press means.

The segment S was sliced in V-shape reciprocally from the upper side and the lower side respectively by an upper knife 14 and a lower knife 14'.  The thickness of a sliced material was 0.03 mm.  Thus, a pleat-type membrane was formed.

Following the process, the pleat-type membrane was immersed in a water solution of heated alkali (NaOH) and the Islands 2 made of polyethylene terephthalate was dissolved, removed and transformed into pores.  Each pore was ellipse of 1μ x 10μ.  The pores maintained the same exact profile as the original Islands.  In order to enhance the strength of the membrane, it is optional to carry out again heating, rapid cooling, annealing or the like.

When making a pleat-type membrane cartridge in accordance with any one of the aforesaid three conventional methods for producing a membrane filter, a flattened membrane must be folded to form pleats.  At that time, the membrane is extended on the summit portion, while shortened at the bottom portion.  Thus, the pore diameter becomes irregular. However, this invention has succeeded in eliminating such inconveniences.

According to the aforesaid example, the profile of the Islands i.e. the profile of the pore is ellipse.  It is more suitable than a right circle.  Since the sectional area of the ellipse is enlarged, the penetration pressure is reduced, thereby the durability of the filter can be prolonged. Further, the penetration efficiency is also increased greatly. Of course, it is possible to form the profile e.g. in T, Y and X shape.

As described previously, the multifiber used in this invention has the diameter of 200μ x 200μ and contains 100 Islands (strands) each having the diameter of 1μ x 10μ. Namely, the area of 1 cm$^2$ (combined with a large number of multifibers has 250,000 pores). It is nearly equivalent to 2,500,000 circular pores each having the diameter of 1μ.

It is optional to form more than 1,000 Islands in the multifiber. Actually, an ultramico-fiber of 0.1μ in diameter is manufactured. Accordingly, if such a fiber is employed in this invention, it is feasible to produce a highly accurate membrane filter having very regular pore distribution.

In addition, the Islands in the multiber can be replaced with metal or conductive fiber, thereby it becomes possible to manufacture a plastic material having conductivity in only one direction.

While I have shown and described certain embodiments of my invention, it is to be understood that it is capable of many modifications. Changes, therefore, in the contruction and arrangement may be made without departing from the spirit and scope of the invention as defined in the appended claims.

Claims:

1. A porous membrane filter comprises:

winding up a single multifiber tightly round a bobbin, said multifiber having a Sea portion and a large number of Islands;

incorporating said bobbin wound up by said multifiber into a cylindrical chamber of a sintering furnace;

melting the Sea portion under a high temperature and a high pressure by means of heater means and pressure means disposed on said sintering furnace;

slicing said bobbin treated by the aforesaid process vertically relative to respective fiber axis; and

dissolving said large number of Islands by means of etching and transforming them into pores, thereby a large number of ultramicro-pores being produced and distributed in a regular form on the surface of the membrane.

2. A porous membrane filter as claimed in claim 1, wherein said Sea portion is a binder.

3. A porous membrane filter as claimed in claim 1, wherein said Islands are strands.

4. A process for manufacturing a porous membrane filter, comprising:

winding up a single multifiber tightly round a bobbin, said multifiber having a Sea portion and a large number of Islands;

incorporating said bobbin wound up by said multifiber into a cylindrical chamber of a sintering furnace;

melting the Sea portion under a high temperature and a high pressure by means of heater means and pressure means disposed on said sintering furnace;

slicing said bobbin treated by the aforesaid process vertically relative to respective fiber axis; and

dissolving said large number of Islands by means of etching and transforming them into pores, thereby producing a large number of ultramicro-pores on the surface of the membrane.

5. A process for manufacturing a porous membrane filter, as claimed in claim 4, wherein said Sea portion is a binder.

6. A process for manufacturing a porous membrane filter, as claimed in claim 4, wherein said Islands are strands.

7. A process for manufacturing a porous membrane filter, as claimed in claim 4, in which said large number of pores are distributed in a regular form on the surface of the membrane.

# FIG.1

# FIG.2

# FIG.3

# FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | DE-A-2 915 524 (AKZO)<br>* Claims 1,12,14,16,18; figures 1-5,7-9,31,32 * | 1-7 | B 01 D 13/04 |
| A | US-A-3 234 639 (H.-J. DIETZSCH)<br>* Figures 1,9-12 * | 1,4 | |
| A | DE-A-2 750 897 (R. STEMME)<br>* Claims 1,2,5,6 * | 1-7 | |

TECHNICAL FIELDS SEARCHED (Int. Cl.4)

B 01 D 13/00
B 01 D 13/01
B 01 D 13/04
A 61 M 1/16
C 02 F 1/44

The present search report has been drawn up for all claims

| Place of search | Date of completion of the search | Examiner |
|---|---|---|
| BERLIN | 28-08-1985 | KUEHN P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82